# DEMANDE DE BREVET EUROPEEN

(11) **EP 1 927 941 A1**
(43) Date de publication de la demande: **04.06.2008**
(21) Numéro de dépôt: 08152946.3
(22) Date de dépôt: 08.10.1998
(51) Int. Cl.: G06K 19/077

(54) **Carte à puce comportant une antenne et procédé de fabrication**

(30) Priorité: 08.10.1997 FR 9712530
(62) Demande divisionnaire de: 98947625.4
(71) Demandeur: GEMPLUS, 13420 Gémenos (FR)
(72) Inventeur: Zafrany, Michael, 13006 Marseille (FR); Patrice, Philippe, 13011 Marseille (FR); Ayala, Stéphane, 13010 Marseille (FR); Bourneix, Gérard, 13850 Greasque (FR); Beausoleil, Christine, 13012 Marseille (FR); Martin, David, 13600 La Ciotat (FR); Oddou, Laurent, 13600 La Ciotat (FR)

(57) **Abrégé**

L'invention concerne un procédé de fabrication de cartes à puces aptes à assurer un fonctionnement à contact et sans contact dites cartes mixtes et de cartes à puce sans contact. Pour éviter les risques de détérioration de l'antenne le procédé consiste à réaliser une antenne comprenant au moins deux spires, sur une feuille support, ladite antenne ayant ses spires placées à l'extérieur des plages de connexion, et à prévoir un pont isolant afin de pouvoir relier chacune des extrémités de l'antenne respectivement à une plage de connexion.

## Description

L'invention concerne la fabrication des cartes à puce, aptes à assurer un mode de fonctionnement à contact et un mode de fonctionnement sans contact. Ces cartes sont munies d'une antenne intégrée dans la carte et d'un micromodule relié à l'antenne. Les échanges d'informations avec l'extérieur se font soit par l'antenne (donc sans contact), soit par les contacts affleurant à la surface de la carte.

On appellera dans toute la suite de la description ce type de carte par carte à fonctionnement mixte ou carte à puce mixte.

Le procédé de fabrication concerne également les cartes à puce sans contact, c'est-à-dire les cartes à puce aptes à assurer un fonctionnement sans contact, les échanges d'informations vers l'extérieur se faisant uniquement par l'antenne.

Cependant, pour simplifier l'exposé qui va suivre on ne parlera dans la suite que de cartes mixtes, le procédé s'étendant, comme cela vient d'être dit, également aux cartes à puce sans contact.

Les cartes à puce mixtes sont destinées à réaliser diverses opérations, telles que, par exemple, des opérations bancaires, des communications téléphoniques, des opérations d'identification, des opérations de débit ou de rechargement d'unités de compte, et toutes sortes d'opérations qui peuvent s'effectuer soit en insérant la carte dans un lecteur, soit à distance par couplage électromagnétique (en principe de type inductif) entre une borne d'émission-réception et une carte placée dans la zone d'action de cette borne.

Les cartes mixtes doivent avoir obligatoirement des dimensions normalisées identiques à celles des cartes à puces classiques pourvues de contacts. Ceci est souhaitable pour les cartes fonctionnant uniquement sans contact.

On rappelle que les cartes à contact sont définies par la norme usuelle ISO 7810, cette définition étant : une carte de 85 mm de long, 54 mm de large, et 0,76 mm d'épaisseur. Les contacts affleurent à des positions bien définies à la surface de la carte.

Ces normes imposent des contraintes sévères pour la fabrication. L'épaisseur très faible de la carte (800 µm) est en particulier une contrainte majeure, plus sévère encore pour les cartes mixtes que pour les cartes simplement munies de contacts, car il faut prévoir l'incorporation d'une antenne dans la carte.

Les problèmes techniques qui se posent sont des problèmes de positionnement de l'antenne par rapport à la carte, car l'antenne occupe presque toute la surface de la carte, des problèmes de positionnement du module de circuit intégré (comprenant la puce et ses contacts) qui assure le fonctionnement électronique de la carte, et des problèmes de précision et de fiabilité de la connexion entre le module et l'antenne; enfin, des contraintes de tenue mécanique, de fiabilité et de coût de fabrication doivent être prises en compte.

L'antenne est généralement constituée d'un élément conducteur déposé en couche mince sur une feuille support en plastique. Aux extrémités de l'antenne sont prévues des plages de connexion qui doivent être mises à jour afin de pouvoir les connecter aux contacts du module électronique.

L'élément conducteur formant l'antenne sera dénommé dans la suite fil d'antenne étant donné qu'il pourra s'agir selon la technologie employée soit d'un fil incrusté dans la feuille support de fabrication, soit de pistes imprimées.

Une solution préconisée pour fabriquer les cartes à puce mixtes consiste à utiliser des feuilles plastiques pré-percées au niveau des plages de connexion de l'antenne formées par les deux extrémités du fil d'antenne, à les superposer sur la feuille supportant l'antenne et à les assembler par laminage à chaud ou à froid. La position des plages de connexion de l'antenne est limitée par la position du module électronique qui est elle-même définie par les normes ISO.

Il faut ensuite usiner une cavité dans le corps de carte, entre les plages de connexion de l'antenne et au-dessus des perforations prévues dans les feuilles plastiques recouvrant l'antenne, pour y placer le module électronique, puis connecter les contacts du module électronique aux plages de connexion de l'antenne en déposant une colle conductrice dans les perforations. Le fil d'antenne comporte en général plusieurs spires. Ces spires passent entre les plages de connexion, de manière à pouvoir être reliées à ces plages de connexion qui se trouvent dans la région du micromodule.

Un premier problème se pose alors du fait de cette structure. Les spires peuvent être endommagées lors de l'usinage de la cavité. En effet, les spires peuvent même être détruites au cours de cette étape si l'antenne n'est pas positionnée de manière très précise par rapport à la position de la cavité.

L'invention permet de résoudre ce premier problème de risques d'endommagement de l'antenne voire même de destruction. A cette fin, l'invention propose un procédé de fabrication de carte à puce, ladite carte à puce comportant une antenne aux extrémités de laquelle sont prévues des plages de connexion avec un module électronique, caractérisé en ce qu'il comprend au moins une étape consistant à réaliser l'antenne comprenant au moins deux spires, sur une feuille support, ladite antenne ayant ses spires placées à l'extérieur des plages de connexion, et un pont isolant afin de pouvoir relier chacune des extrémités de l'antenne respectivement à une plage de connexion.

Cette étape du procédé de fabrication permet d'obtenir un espace libre entre les plages de connexion de l'antenne, dans lequel il est possible de creuser une cavité pour le module sans risquer d'endommager les spires de l'antenne.

Le pont isolant est réalisé en recouvrant, sur une zone, les spires de l'antenne par une couche isolante, puis en déposant, sur cette couche isolante, un élément conducteur de manière à pouvoir relier une extrémité extérieure de l'antenne à une plage de connexion.

Une autre manière de réaliser le pont isolant consiste à former l'antenne de part et d'autre de la feuille support, les plages de connexion étant réalisées sur une même face de la feuille support.

De plus, dans la solution préconisée par l'art antérieur, le corps de carte étant constitué d'un empilement de plusieurs feuilles, les perforations pratiquées dans chaque feuille doivent se superposer. Or, lors de l'étape de laminage, la géométrie des perforations n'est pas contrôlée et peut fluctuer. D'autre part, au cours de cette étape de laminage, la pression devient nulle à l'aplomb des perforations alors qu'elle est élevée sur le corps de carte. Cette différence de pression entraîne la création d'un défaut à la surface des cartes.

Pour éviter ce problème de déformation de la carte, l'invention propose en outre d'assembler toutes les feuilles plastiques destinées à former le corps de carte puis d'usiner le corps de carte pour former la cavité réservée au module électronique et les puits de connexion destinés à mettre à jour les plages de connexion de l'antenne.

Cet usinage sera fait de préférence en une seule étape, ceci étant rendu possible grâce au contrôle précis de la position de l'antenne par rapport à la position de la cavité.

Le fait d'usiner simultanément la cavité et les puits de connexion simplifie et accélère grandement le procédé de fabrication.

Par ailleurs, l'invention propose une deuxième solution au problème de risque d'endommagement de l'antenne, voire même de destruction. Elle propose en effet un procédé de fabrication d'une carte à puce, ladite carte à puce comportant une antenne aux extrémités de laquelle sont prévues des plages de connexion avec un module électronique, caractérisé en ce qu'il comporte au moins une étape consistant à usiner une cavité et des puits de connexion dans une face supérieure du corps de carte, de manière que le plan d'usinage du fond de la cavité soit situé au-dessus du plan de l'antenne et que les puits de connexion soient situés au-dessus des plages de connexion de l'antenne et permettent de les mettre à jour.

En outre, les éléments de connexion entre le module et l'antenne, que l'on dénommera dans la suite interconnexion, peuvent être endommagés lors des tests des cartes en flexion et en torsion. Pour minimiser les contraintes subies à l'interconnexion lors de ces tests, l'invention propose de placer l'antenne à un endroit de la carte où les contraintes sont les moins élevées. Ainsi, la feuille supportant l'antenne est placée au niveau de la fibre neutre de la carte. La fibre neutre d'une carte est définie comme étant la couche située au milieu de l'épaisseur de la carte.

En outre, après l'usinage de la cavité, la connexion de l'antenne au module électronique se fait généralement par remplissage des puits de connexion à l'aide d'une colle conductrice. Lorsque le module est encarté, le temps de chauffage est trop court pour assurer une polymérisation correcte de la colle. Dans ces conditions les cartes doivent séjourner longtemps dans une étuve. De plus, étant donné que la température maximum supportée par le corps de carte est en général inférieure à 100°C, il est très difficile d'assurer une bonne interconnexion sans déformer le corps de carte. Par conséquent, dans ces conditions la fabrication des cartes est longue et difficile et ne peut pas être adaptée à une production en masse.

L'invention apporte différentes solutions à ce problème d'interconnexion. Elle propose notamment d'utiliser une pâte à braser à basse température de fusion, c'est-à-dire à température de fusion très inférieure à 180°C, pour réaliser la connexion entre les plages de connexion de l'antenne et le module électronique. Pour cela la pâte à braser comporte un alliage à base d'indium et d'étain, ou à base de bismuth, d'étain et de plomb, ou à base de bismuth, d'indium et d'étain.

Selon d'autres caractéristiques, la connexion entre les plages de connexion de l'antenne et le module électronique est réalisée au moyen d'une graisse conductrice, ou au moyen d'un joint en silicone chargé de particules métalliques.

D'autres particularités et avantages de l'invention apparaîtront à la lecture de la description donnée à titre d'exemple illustratif et non limitatif, et faite en référence aux figures annexées qui représentent :
- la figure 1, un schéma d'une vue en perspective d'une antenne de carte à puce réalisée sur une feuille support,
- la figure 2, un schéma d'une vue en coupe d'un pont isolant de l'antenne de la figure 1,
- la figure 3, un schéma d'une vue en perspective d'un autre mode de réalisation d'une antenne de carte à puce,
- la figure 4, un schéma d'une vue en perspective d'un autre mode de réalisation d'une antenne de carte à puce,
- les figures 5A à 5C, des vues en coupe d'une carte au cours de différentes étapes d'un procédé de fabrication selon l'invention,
- la figure 6, un schéma d'une carte vue en coupe réalisée selon un autre procédé de fabrication selon l'invention,
- la figure 7A, une vue de dessus des contacts affleurants d'un module simple face,
- la figure 7B, une vue en perspective illustrant la position des puits de connexion par rapport à une cavité pratiquée dans un corps de carte,
- les figures 7C et 7D, deux vues de contacts face intérieure de modules double face,
- la figure 7E, une vue de perspective illustrant la position des puits de connexion dans la cavité.

D'une manière générale, les cartes à puce mixtes seront réalisées par collage (laminage à chaud ou à froid) de feuilles de matière plastique dans lesquelles on aura inséré ou intercalé le conducteur d'antenne; puis ouverture d'une cavité dans les feuilles assemblées, entre les plages de connexion prévues aux extrémités du conducteur d'antenne, pour y créer un logement destiné à recevoir le module électronique de circuit intégré; et rise en place de ce module de manière que deux plages conductrices du module viennent en contact électrique avec les plages de connexion du conducteur d'antenne, soit directement, soit le plus souvent par l'intermédiaire d'un élément de liaison conducteur.

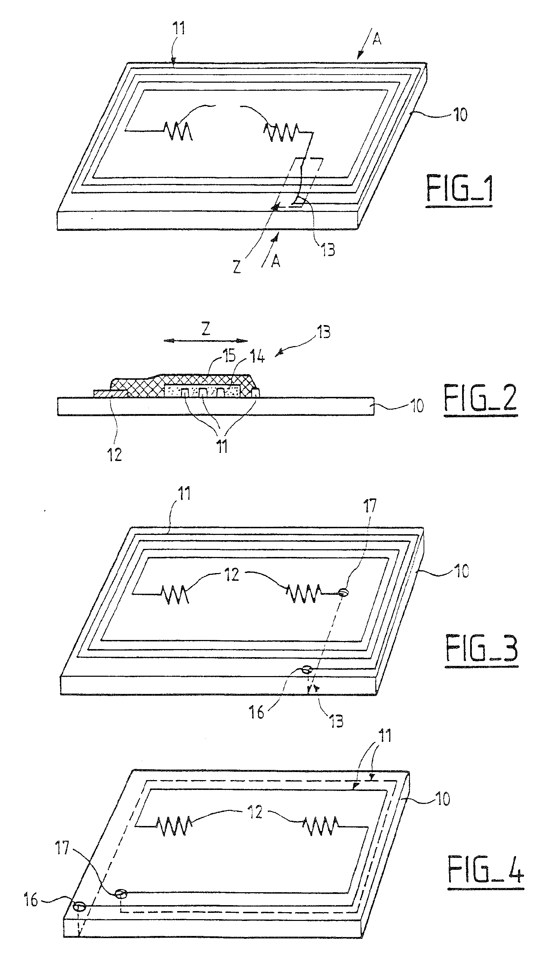

La figure 1 représente un premier mode de réalisation d'une antenne 11 comportant au moins deux spires et destinée à être enfermée dans le corps d'une carte à puce sans contact. Aux extrémités du fil d'antenne 11 sont prévues des plages de connexion 12. Une étape importante d'un procédé de fabrication d'une telle carte à puce sans contact consiste à réaliser l'antenne 11, sur une feuille support 10, de manière à définir précisément sa position dans le corps de carte par rapport à la position d'une cavité à usiner et destinée à recevoir le module électronique.

Selon un premier mode de réalisation les spires de cette antenne 11 sont placées à l'extérieur des plages de connexion 12, et un pont isolant 13 est réalisé de manière à pouvoir relier chacune des extrémités de l'antenne respectivement à une plage de connexion 12 sans création de court-circuit. Ce mode de réalisation permet de libérer l'espace situé entre les plages de connexion 12 de l'antenne 11 puisqu'aucune spire n'y passe. Cet espace étant libéré, les pistes de l'antenne ne risquent pas d'être endommagées, lors d'une étape ultérieure d'usinage de la cavité réservée au micromodule, et les tolérances de positionnement sont grandement élargies.

La figure 2 illustre une vue en coupe selon A-A de la figure 1 et représente le pont isolant 13 de l'antenne 11. Ce pont isolant 13 est réalisé en recouvrant, sur une zone Z, les spires de l'antenne 11 par une couche isolante 14, puis en déposant, sur cette couche isolante 14, un élément conducteur 15 permettant de relier l'extrémité d'une spire, et notamment l'extrémité de la dernière spire située la plus à l'extérieur de la feuille support 10, à l'une des plages de connexion 12 de l'antenne.

Selon un autre mode de réalisation, illustré sur les figures 3 et 4 l'antenne 11 est réalisée de part et d'autre de la feuille support 10. Dans ce cas, des via de connexion (trous métalliques) 16, 17 sont pratiqués dans la feuille support. Les plages de connexion 12 de l'antenne sont réalisées sur une même face. Le pont isolant 13 est donc réalisé au moyen de trous métalliques pour assurer la liaison entre les fils d'antenne se trouvant de part et d'autre de la feuille support 12, tel que schématisé en traits pointillés sur les figures 3 et 4.

Le pont isolant 13 permet ainsi de croiser les spires de l'antenne sans qu'elles se chevauchent directement et donc sans créer de court-circuit.

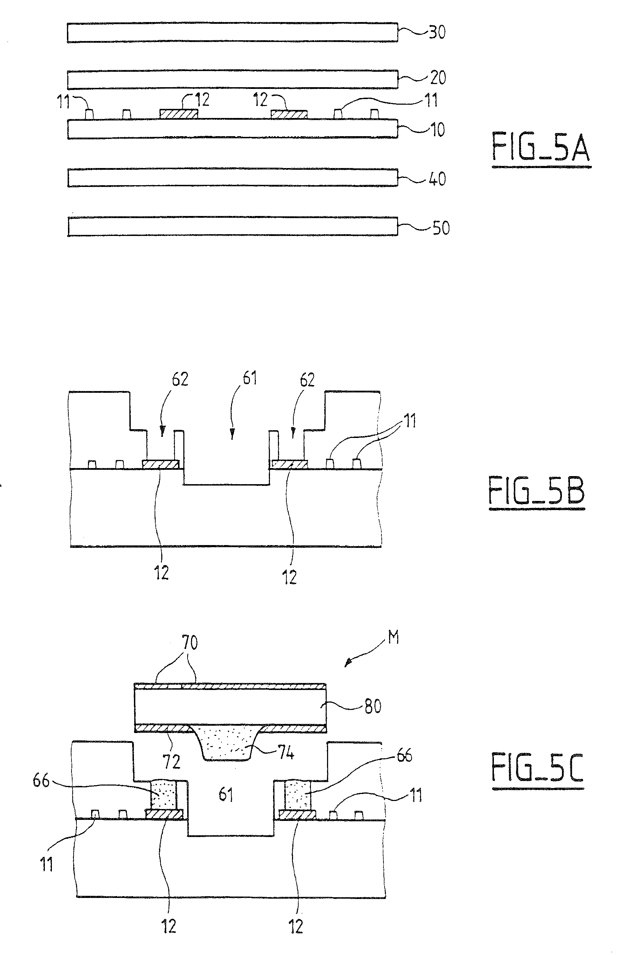

Après avoir réalisé cette antenne sur la feuille support 10, en matière plastique, on assemble cette feuille support 10 à d'autres feuilles plastiques 20, 30, 40, 50 et on les colle par laminage à chaud ou à froid. Cette étape d'assemblage est illustrée sur la figure 5A.

Les feuilles 20 et 40 correspondent à des feuilles, éventuellement imprimées, supérieure et inférieure du corps de carte. Les feuilles 30 et 50 sont des feuilles de protection respectivement supérieure et inférieure destinées à fermer le corps de carte et à protéger les feuilles imprimées 20 et 40.

Dans une variante de réalisation, il est possible de rajouter une sixième feuille plastique et de la positionner juste au-dessus de la feuille support 10 afin d'enfermer l'antenne 11.

Une étape ultérieure, illustrée sur la figure 5B, consiste à usiner une cavité 61 et des puits de connexion 62 dans une face supérieure du corps de carte formé par l'assemblage de feuilles 10, 20, 30, 40 et 50. Cet usinage pourra par exemple être fait en une seule étape.

Le plan d'usinage de la cavité 61 est situé au-dessous des plages de connexion 12 de l'antenne 11. Les puits de connexion 62, quant à eux, sont situés au-dessus des plages de connexion 12 de l'antenne et permettent de mettre ces-dernières à jour.

L'usinage de la cavité et des puits de connexion est réalisé au moyen d'une fraise dont la descente est contrôlée.

La dernière étape du procédé, représentée en figure 5C, consiste ensuite à fixer un module électronique M dans la cavité 61. Le module M comporte sur sa face inférieure, tournée vers l'intérieur de la cavité, des plages conductrices 72 en contact électrique avec les plages de connexion 12 de l'antenne au moyen d'un élément de liaison conducteur 66 placé dans les puits de connexion 62. La manière dont la connexion est établie entre le module et l'antenne est expliquée plus en détail dans ce qui suit.

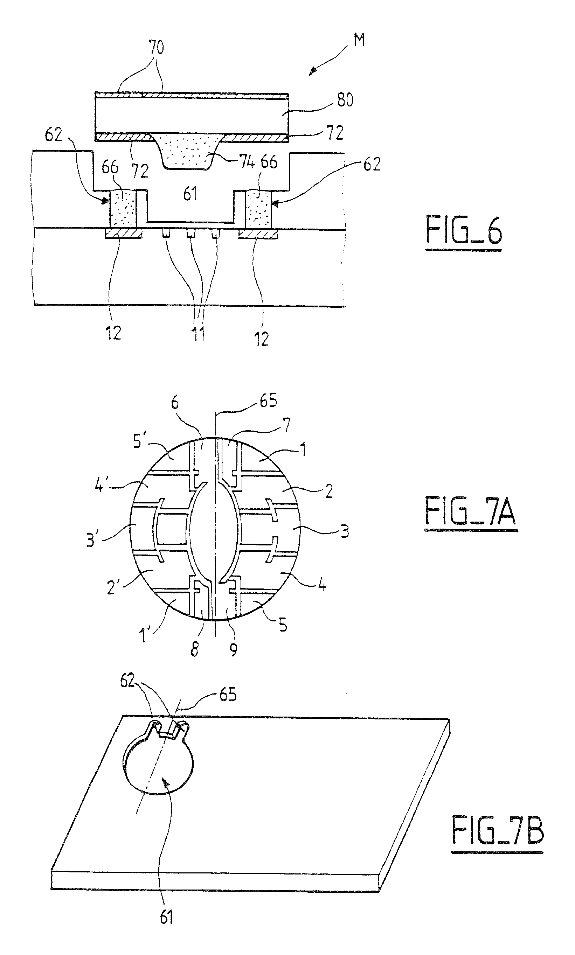

Un procédé de fabrication de carte à puce mixte selon un autre mode de réalisation, et illustré par la figure 6, peut en outre être envisagé pour positionner de manière précise l'antenne par rapport à la cavité du module.

Selon cet autre mode de réalisation, l'antenne 11 est réalisée de manière classique sur une feuille support, c'est-à-dire que les spires de l'antenne passent entre les plages de connexion 12. La feuille supportant l'antenne est ensuite assemblée aux autres feuilles plastiques; puis la cavité 61 et les puits de connexion 62 sont usinés sur la surface supérieure du corps de carte formé par l'assemblage de feuilles. Cette étape est réalisée de telle sorte que le plan d'usinage du fond de la cavité 61 soit situé au-dessus du plan des pistes de l'antenne 11 et que les puits de connexion 62 soient situés au-dessus des plages de connexion 12 de l'antenne et permettent de les mettre à jour. Le module électronique M est ensuite fixé dans la cavité et ses plages conductrices 72 sont électriquement reliées aux plages de connexion 12 de l'antenne à travers les puits de connexion 62.

Dans tous les cas, l'antenne 11 peut être réalisée par incrustation sur une feuille support en plastique. L'incrustation est effectuée de manière connue par un procédé à ultra-son.

D'autre part, pour minimiser les contraintes subies à l'interconnexion, notamment lors de tests des cartes en flexion ou en torsion, l'invention propose de placer l'antenne sur la fibre neutre de la carte. Ainsi, on prévoit de placer la feuille 10 supportant l'antenne de telle sorte qu'elle forme la fibre neutre de la carte. La fibre neutre d'une carte est définie comme étant placée au milieu de l'épaisseur de la carte.

De plus, dans une variante de réalisation du procédé selon l'invention il est possible de réaliser l'usinage de telle sorte que les puits de connexion traversent les plages de connexion 12 de l'antenne. Dans ce cas; la connexion avec le module électronique se fait latéralement, c'est-à-dire par la tranche des plages de connexion, en appliquant un élément de liaison conducteur dans les puits de connexion et sur les bords latéraux des plages de connexion.

En général, la surface de contact des plages de connexion de l'antenne est faible car elle est du même ordre de grandeur que la largeur du fil conducteur utilisé pour former l'antenne (c'est-à-dire quelques dizaine de µm). Par conséquent, l'interconnexion avec le module électronique est difficile à mettre en oeuvre car elle exige beaucoup de précision. Il est donc préférable de réaliser les plages de connexion 12 de telle sorte qu'elles présentent un motif en zigzag afin d'accroître leur surface de contact. Ce motif en zigzag est effectué par torsions du fil d'antenne (voir figures 1, 3, 4).

Le module M peut être un module à circuit imprimé simple face ou un module à circuit-imprimé double face, et dans ce dernier cas il peut avoir deux configurations possibles sur lesquelles on reviendra plus loin.

Un module M est représenté sur les figures 5 et 6 au-dessus de la cavité 61. Dans ces exemples il s'agit d'un module à circuit imprimé double face comportant des conducteurs supérieurs 70 sur la face qui sera tournée vers l'extérieur de la cavité et des conducteurs inférieurs 72 sur la face qui sera tournée vers l'intérieur de la cavité. Les conducteurs sont formés sur une feuille isolante 80 et des via conducteurs qui peuvent relier les conducteurs supérieurs 70 et inférieurs 72. Une puce noyée dans une résine de protection 74 est montée sur la face inférieure et connectée aux conducteurs 72 (et par là aux conducteurs 70).

Le module s'adapte dans la cavité 61 qui a été usinée à ses dimensions. Deux plages conductrices de la face inférieure du module, disposées juste au-dessus des plages de connexion 12 de l'antenne, sont reliées électriquement à ces deux plages de connexion grâce à un élément de liaison conducteur 66.

Dans une variante de réalisation particulièrement intéressante, le module est constitué par un circuit imprimé double face portant la puce de circuit intégré, mais ce circuit double face est réalisé sans via conducteur entre les conducteurs des deux faces, ce qui le rend moins coûteux. Dans ce cas, le circuit double face comporte une feuille isolante 80 portant sur une face des premières plages conductrices 70 destinées à servir de contacts d'accès de la carte à puce et sur l'autre face des secondes plages conductrices 72 destinées à être reliées à l'antenne. Des fils de liaison sont soudés entre la puce et les premières plages conductrices à travers des zones ajourées de la feuille isolante et d'autres fils de liaison sont soudés entre la puce et les secondes plages conductrices sans passer à travers la feuille isolante.

La définition d'un module simple face pour carte mixte consiste à trouver la position des contacts pour l'antenne, ce qui présente les difficultés suivantes :
- les zones de contact définies par les normes ISO et AFNOR ne peuvent pas accueillir les contacts de l'antenne sous peine de mettre le lecteur en court-circuit,
- coté assemblage, la résine de protection de la puce et des bondings élimine la zone centrale du module,
- les performances de résistance à la flexion de la carte impose la présence de ligne de déformation préférentielle sans faire apparaître de zones de fragilisation du métal coté contact.

La figure 7A schématise une vue de dessus des contacts affleurants d'une carte à puce dans le cas d'un module simple face et répondant à ces problèmes. Le module comporte des plages de contacts 1, 2, 3, 4, 5 et 1', 2', 3', 4', et 5', dont la position est normalisée par les normes ISO et AFNOR. Ces plages de contact sont connectées à la puce pour assurer le fonctionnement du module. La position des zones de contact à utiliser pour connecter le module et l'antenne ne peut se situer que dans les zones hautes 6 et 7 et basses 8 et 9 de part et d'autre d'un axe 65 du module, c'est-à-dire en dehors des zones de contact définis par la norme ISO.

Dans ces conditions donc, la position des plages de connexion de l'antenne ainsi que la position des puits de connexion dans le corps de carte sont limitées par la position normalisée des zones de contact du module électronique et par la position de ce module dans le corps de carte qui est elle-même définie par les normes ISO.

La figure 7B illustre le cas selon lequel les puits de connexion 62, et donc les plages de connexion correspondantes, sont situés côte à côte et de part et d'autre de la médiatrice 65 de la cavité 61. Ce cas correspond au cas où ce sont les zones de contacts 6 et 7 du module de la figure 7A qui sont électriquement reliées aux plages de connexion de l'antenne.

D'autre part, l'utilisation d'un module double face doit également pouvoir répondre aux inconvénients mentionnés à propos du module simple face.

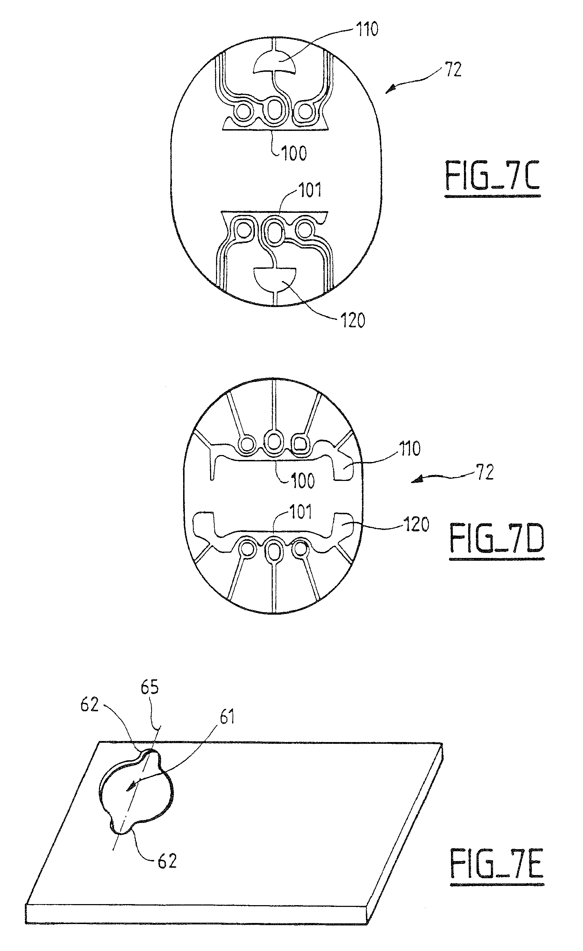

Les contacts représentés sur les figures 7C et 7D offrent une solution à ces problèmes. En particulier la présence de deux pistes 100, 101, de part et d'autre du circuit permet de connecter différentes configurations de puces avec le même module.

Ceux deux modes de réalisation de contacts pour module double face comportent au moins une piste à bord parallèle à la puce, reliée à des zones de contacts 110 et 120. Ces zones 110 et 120 représentent les zones de contacts possible avec l'antenne.

La figure 7E illustre le cas selon lequel les puits de connexion 62, et donc les plages de connexion de l'antenne, sont diamétralement opposés et situés sur une médiatrice 65 de la cavité. Ce cas correspond au cas où ce sont les zones de contacts 110 et 120 du module de la figure 7C qui sont électriquement reliées aux plages de connexion de l'antenne.

Les figures 7B et 7E illustrent des puits de connexion réalisés en continuité avec la cavité ce qui leur procure la forme particulière visible sur ces schémas. Bien entendu, ces puits pourraient ne pas êtres en continuité de la cavité et se présenter sous la forme de trous de forme quelconque dès l'instant où leur positionnement est tel que défini précédemment.

L'interconnexion entre le module électronique et l'antenne peut se faire à l'aide d'un élément de liaison conducteur de type pâte à braser. Cependant, en général les température de refusion de ces produits sont très élevées. Elles se situent autour de 180°C. Ces températures sont incompatibles avec les matériaux plastiques utilisés pour former les corps de carte qui ne supportent pas des températures très supérieures à 100°C.

L'invention propose d'utiliser des pâtes à braser à bas point de fusion pour permettre d'assurer une bonne compatibilité avec le corps de carte. Pour cela, il est préférable d'utiliser une pâte à braser comportant un alliage à base d'indium et d'étain, ou à base de bismuth, d'étain et de plomb, ou encore à base de bismuth, d'étain et d'indium.

Dans le cas d'un alliage d'indium et d'étain, la pâte à braser comporte au plus 52% en poids d'indium et 48% en poids d'étain. A cette composition, la température de fusion de la pâte à braser est égale à 118°C.

Dans le cas d'un alliage de bismuth, d'étain et de plomb, la pâte à braser comporte au plus 46% en poids de bismuth et 34% en poids d'étain et 20% en poids de plomb. A cette composition, la température de fusion de la pâte à braser est égale à 100°C.

Dans le cas d'un alliage de bismuth, d'indium et d'étain, la pâte à braser comporte au plus 57% en poids de bismuth, 26% en poids d'indium et 17% en poids d'étain. A cette composition, la température de fusion de la pâte à braser est égale à 79°C.

Une autre solution pour réaliser l'interconnexion consiste à déposer de la graisse conductrice chargée en particules métalliques dans les puits de connexion. Le contact s'effectue alors par friction et assure la conduction électrique entre l'antenne et le module, et ce quelles que soient les sollicitations mécaniques appliquées sur la carte.

Une troisième solution pour réaliser l'interconnexion consiste à utiliser un joint en silicone chargé en particules métalliques. Cette solution offre l'avantage d'une très grande souplesse du joint conducteur. Dans ce cas, les dimensions du joint en silicone sont supérieures à la hauteur des puits de connexion de façon à comprimer le silicone et mettre les particules métalliques en contact.

Quelle que soit la solution retenue, la fiabilité de l'interconnexion entre l'antenne et le module peut être augmentée en utilisant des billes d'or déposées sur les plages conductrices 72 du module. Ces billes d'or n'assurent pas la connexion mais augmentent la surface de collage et modifient la répartition des contraintes dans le joint conducteur lorsque la carte est soumise à des sollicitations mécaniques. Ces billes sont déposées par thermo-compression. Elles peuvent en outre être empilées pour augmenter la hauteur de la surface de contact.

## Revendications

1. Procédé de fabrication d'une carte à puce, la carte à puce comprenant une antenne (11) aux extrémités de laquelle sont prévues deux extrémités ou plages de connexion (12), **caractérisé en ce que** le procédé comporte au moins une étape consistant à réaliser l'antenne (11) sur une feuille support (10) avec au moins deux spires et un pont isolant croisant les spires afin d'avoir les deux extrémités ou plages de connexion de l'antenne du même côté des spires.

2. Procédé selon la revendication 1, **caractérisé en ce qu'**il consiste en outre à:
- assembler la feuille support (10) avec des feuilles plastiques (20, 30, 40, 50) pour former un corps de carte;
- usiner une cavité (61) et des puits de connexion (62) dans une face supérieure du corps de carte ;
- fixer un module électronique (m) dans la cavité (61), le module ayant sur sa face inférieure, tournée vers l'intérieur de la cavité, des plages de conductrices(72) en contact électrique avec les plages de connexion (12) de l'antenne au moyen d'un élément de liaison conducteur (66) placé dans les puits de connexion (62).

3. Feuille support (10) portant une antenne (11) avec au moins deux spires, **caractérisé en ce qu'**elle comporte un pont isolant croisant les spires afin d'avoir les deux extrémités ou plages de connexion de l'antenne du même côté des spires.

4. Feuille support (10) selon la revendication 3, **caractérisée en ce que** les plages de connexion (12) sont réalisées par incrustation de fil.

5. Feuille support (10) selon l'une des revendications 3 ou 4, **caractérisée en ce que** le pont isolant comporte un élément conducteur (15) isolé des spires.

6. Feuille support (10) selon l'une des revendications 3 ou 4, **caractérisée en ce que** le pont isolant (13) est réalisé afin de pouvoir relier des extrémités de chaque antenne ou des plages de contact sans créer de court-circuit.

7. Feuille support (10) selon l'une des revendications 3 à 5, **caractérisée en ce que** les plages de connexion définissent un motif en zigzag.

8. Carte à puce comprenant la feuille selon l'une des revendications 3 à 7.
